(19) Europäisches Patentamt
European Patent Office
Office européen des brevets

(11) **EP 3 173 629 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
*F04D 29/54* *(2006.01)*      *F04D 29/56* *(2006.01)*
*F01D 5/14* *(2006.01)*      *F04D 19/02* *(2006.01)*

(21) Anmeldenummer: **16195425.0**

(22) Anmeldetag: **25.10.2016**

(54) **VERFAHREN FÜR UND VERDICHTER EINER STRÖMUNGSMASCHINE**

METHOD FOR AND COMPRESSOR OF A TURBOMACHINE

PROCÉDURES POUR ET COMPRESSEUR DE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2015 DE 102015223212**

(43) Veröffentlichungstag der Anmeldung:
**31.05.2017 Patentblatt 2017/22**

(73) Patentinhaber: **MTU Aero Engines AG**
**80995 München (DE)**

(72) Erfinder:
• **Elorza Gomez, Sergio**
**80997 München (DE)**
• **Schneider, Tim**
**80634 München (DE)**

(56) Entgegenhaltungen:
**EP-A1- 2 944 824      DE-A1- 1 428 098**
**DE-C- 855 891      GB-A- 710 300**
**GB-A- 2 187 237**

**Beschreibung**

Die Erfindung betrifft ein Verfahren zum Betreiben eines Verdichters einer Strömungsmaschine, einen Verdichter einer Strömungsmaschine und eine Strömungsmaschine.

In herkömmlichen Axialverdichtern von Strömungsmaschinen wie Flugtriebwerke und statischen Gasturbinen fällt ein Reaktionsgrad im vorderen Verdichterbereich von einem eintrittsseitigen Maximum auf ein Minimum ab. Der Reaktionsgrad lässt sich nach der folgenden Formel, basierend auf Metallwinkeln, vereinfacht berechnen:

$$ R = \frac{\tan\frac{\beta 1 + \beta 2}{2}}{\tan\frac{\beta 1 + \beta 2}{2} + \tan\frac{\alpha 1 + \alpha 2}{2}} $$

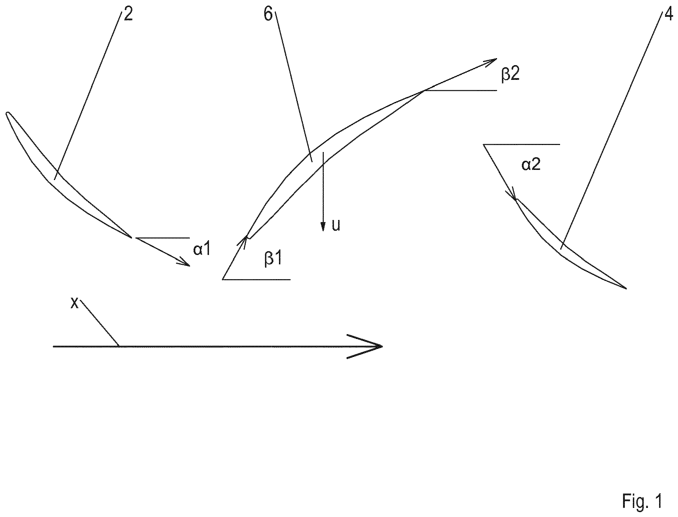

Die Winkel $\alpha 1$, $\alpha 2$, $\beta 1$, $\beta 2$ werden, wie in Figur 1 dargestellt, zwischen Tangenten der jeweiligen Skelettlinie und einer axialen Strömungsrichtung x der Strömungsmaschine abgetragen. $\alpha 1$ wird von der Hinterkante einer Leitschaufel 2 einer Leitschaufelreihe n-1 abgetragen. $\alpha 2$ wird zur Anströmkante einer Leitschaufel 4 einer Leitschaufelreihe n hin abgetragen. $\beta 1$ wird zur Anströmkante einer Laufschaufel 6 einer Laufschaufelreihe n hin abgetragen. $\beta 2$ wird von der Hinterkante der Laufschaufel 6 der Laufschaufelreihe n abgetragen. Dabei läuft die Laufschaufel 6 bzw. die Laufschaufelreihe n in Umfangsrichtung u zwischen den Leitschaufeln 2, 4 bzw. den Leitschaufelreihen n-1, n hindurch. Der Buchstabe n kennzeichnet ganzzahlige Vielfache von 1, 2,.... Gewöhnlich deckt der Reaktionsgrad bei Verdichtern einen Bereich zwischen 0,5 und 1,0 ab. Turbinen decken gewöhnlich Reaktionsgrade von 0,0...0,05 bis 0,5 ab. Dem Abfallen des Reaktionsgrads stromaufwärts des ersten nichtverstellbaren Leitgitters folgt bei bekannten Strömungsmaschinen ein Anstieg des Reaktionsgrads bis zum Verdichteraustritt. Durch den Anstieg lässt sich im hinteren Verdichterbereich und insbesondere am Austrittsleitgitter des Verdichters ein Restdrall im Hauptstrom reduzieren, allerdings verursacht der Anstieg eine hohe Belastung der hinteren Stufen, was zu Stabilitäts- und Wirkungsgradeinschränkungen führt. Um eine geforderte Stabilität zu erreichen, benötigen die hinteren Leitgitter eine hohe Schaufelzahl.

Bekannte Verdichter und Verfahren zum Betreiben der Verdichter sind beispielsweise in der EP 2 944 824 A1, GB 2 187 237 A, DE 14 28 098 A1, DE 855 891 C, GB 710 300 A beschrieben.

Aufgabe der Erfindung ist es, ein Verfahren zum Betreiben eines Verdichters einer Strömungsmaschine zu schaffen, mittels dem eine hohe Stabilität und ein hoher Wirkungsgrad erzielt werden. Zudem ist es Aufgabe der Erfindung, einen Verdichter einer Strömungsmaschine zu schaffen, der sowohl eine hohe Stabilität, als auch einen hohen Wirkungsgrad aufweist, sowie eine Strömungsmaschine mit einer hohen Stabilität und einem hohen Wirkungsgrad zu schaffen.

Diese Aufgabe wird gelöst durch ein Verfahren mit den Merkmalen des Patentanspruchs 1, durch eine Vorrichtung mit den Merkmalen des Patentanspruchs 5 und durch eine Strömungsmaschine mit den Merkmalen des Patentanspruchs 13.

Bei einem erfindungsgemäßen Verfahren zum Betreiben eines Verdichters einer Strömungsmaschine wird in Richtung eines Hauptstroms betrachtet ein langsam abfallender Reaktionsgrad in einem Verdichterbereich schnell angehoben und der angehobene Reaktionsgrad dann wieder langsam abgebaut. Ein hoher Reaktionsgrad bedeutet eine hohe Stabilität und geringe Empfindlichkeit, was sich insbesondere günstig bei Teillast auswirkt. Ein Pumpen wird beispielsweise wirkungsvoll verhindert. Der dem steilen Anstieg folgende langsame bzw. langsamere Abfall des Reaktionsgrades bedeutet eine Entlastung für die hinteren Leitgitter. Folglich können diese eine reduzierte Schaufelzahl oder eine geringere axiale Breite aufweisen, wodurch Verluste reduziert werden, was zu einer Verbesserung des Wirkungsgrads führt. Das schlagartige Anheben des abgefallenen Reaktionsgrades mittels des vorderen hochumlenkenden Leitgitters kann grundsätzlich auf ein beliebig hohes Niveau erfolgen. Bevorzugt wird ein Niveau vergleichbar zum verdichtereintrittseitigen, ursprünglichen hohen Reaktionsgrad.

Die Stabilität lässt sich weiter verbessern, wenn der Reaktionsgrad mehrmals schnell angehoben wird und jeweils nach dem Anheben langsam abfällt. Dies ist insbesondere bei langen Verdichtern bzw. Verdichtern mit einer hohen Stufenzahl vorteilhaft, wobei der Abfall über mehr Stufen als der Anstieg erfolgt.

Um eine günstige Anströmung eines Brennkammerbereichs zu erreichen ist es vorteilhaft, wenn ein Drall des Hauptstroms nach einem langsamen Abfall des Reaktionsgrades abgebaut wird. Ein erfindungsgemäßer Verdichter einer Strömungsmaschine hat zumindest ein hochumlenkendes Leitgitter zum Anheben eines Reaktionsgrades, das zwischen einem in Richtung eines Hauptstroms betrachtet vorderen Verdichterbereich und einem hinteren Verdichterbereich angeordnet ist, in dem der Reaktionsgrad jeweils langsam abfällt. Der vordere Verdichterbereich und der hintere Verdichterbereich weisen bevorzugterweise nichthochumlenkende Leitgitter auf bzw. sind frei von hochumlenkenden Leitgittern. Sie können jedoch auch hochumlenkende Leitgitter aufweisen, die grundsätzlich ebenfalls einen langsamen Reaktionsgradabfall ermöglichen. Die Formulierung "langsam abfällt" bzw. "langam abfallen" bedeutet dabei ausdrücklich nicht, dass der Reaktionsgrad im vorderen Verdichterbereich und hinteren Verdichterbereich gleich langsam abfällt. Es sind sowohl gleiche, als auch unterschiedliche Abfallgrade möglich.

"Hochumlenkend" bedeutet insbesondere eine de Haller-Zahl kleiner als 0,65, alternativ einen Diffusionsgrad von größer als 0,6. Die Nichthochumlenkenden Leitgitter haben bevorzugterweises eine de Haller-Zahl größer als 0,70. Als de Haller-Zahl gilt der Quotient (v2/v1) einer Anströmgeschwindigkeit v1 eines Schaufelgitters und einer Abströmgeschwindigkeit v2 des Schaufelgitters. Der erfindungsgemäße Verdichter weist zum einen eine hohen Stabilität und zum anderen einen hohen Wirkungsgrad auf. Die hohe Stabilität wird dadurch erreicht, dass mittels des vorderen hochumlenkenden Leitgitters der langsam abfallende Reaktionsgrad schlagartig und stark angehoben wird. Durch den langsamen Abfall und das schnelle Anheben des Reaktionsgrades werden mehr Leitgitter entlastet als belastet.

Bei einem bevorzugten Ausführungsbeispiel ist das zumindest eine hochumlenkende Leitgitter nichtverstellbar und die nichthochumlenkenden Leitgitter in dem vorderen Verdichterbereich sind verstellbar.

Bevorzugterweise sind die nichthochumlenkenden Leitgitter in dem hinteren Verdichterbereich nicht verstellbar. Hierdurch wird die Komplexität des Verdichters reduziert, die nichthochumlenkenden Leitgitter sind beispielsweise konventionell ausgelegt und ermöglichen einen langsamen, stetigen Abfall des Reaktionsgrads.

Zum Verbesserung einer Anströmung des Brennkammerbereichs ist es vorteilhaft, wenn der dem Brennkammerbereich zugeführte Hauptstrom drallbefreit bzw. zumindest drallreduziert ist. Bei einem Axialverdichter bedeutet dies eine axiale, drallfreie Ausrichtung des Hauptstroms. Zur Drallbefreiung bzw. zum Abbauen des Hauptstromdralls zumindest teilweise sieht ein Ausführungsbeispiel vor, stromabwärts des hinteren Verdichterbereichs ein hochumlenkendes Austrittsleitgitter anzuordnen.

Das Austrittsleitgitter ist vorteilhafterweise nichtverstellbar. Durch diese Maßnahme befinden sich die Schaufelblätter in einer definierten Lage, so dass Verstellungen der Schaufelblätter nicht auftreten können.

Die Stabilität und der Wirkungsgrad von Verdichtern mit hohen Stufenzahlen, beispielsweise mindestens acht (8) Stufen, lässt sich weiter verbessern, wenn sich zwischen dem zumindest einem hochumlenkenden Leitgitter und dem Austrittsleitgitter zumindest ein hochumlenkendes Zwischenleitgitter befindet, dem ein Zwischenverdichterbereich mit nichthochumlenkenden Leitgittern vorgeschaltet ist und mittels dem der Reaktionsgrad erneut angehoben wird. Je nach Anzahl der Zwischenleitgitter lässt sich auf jedes Leitgitter zwischen den hochumlenkenden Leitgittern einzeln Einfluss nehmen bzw. der Reaktionsgrad für jedes Leitgitter individuell einstellen. Der Reaktionsgrad erhält hierdurch einen sägezahnartigen Verlauf.

Zur Vermeidung einer hohen Komplexität des Verdichters ist es vorteilhaft, wenn das zumindest eine hochumlenkende Zwischenleitgitter nichtverstellbar ist und die nichthochumlenkenden Leitgitter in dem Zwischenverdichterbereich nichtverstellbar sind.

Beispielhafte hochumlenkende Leitgitter haben Tandemanordnungen. Die Tandemanordnungen können mehrere Schaufelreihen bilden und jeweils mit zwei, drei oder mehr Schaufelblättern versehen sein.

Eine bevorzugte Strömungsmaschine hat einen erfindungsgemäßen Verdichter bzw. einen Verdichter, der nach dem erfindungsgemäßen Verfahren betrieben ist. Hierdurch zeichnet sich die Strömungsmaschine sowohl durch eine hohe Stabilität, als auch durch einen hohen Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand von schematischen Darstellungen näher erläutert. Es zeigen:

Figur 1 ein Schaubild zur Definition eines verdichterseitigen Reaktionsgrades,

Figur 2 einen Verlauf eines Reaktionsgrads bei einem ersten erfindungsgemäßen Ausführungsbeispiel, und

Figur 3 einen Verlauf eines Reaktionsgrads bei einem zweiten erfindungsgemäßen Ausführungsbeispiel.

Wie bereits eingangs erwähnt, wird im Sinne der Erfindung ein verdichterseitiger Reaktionsgrad einer Strömungsmaschine nach der folgenden, auf Metallwinkeln basierenden Formel, vereinfacht berechnet:

$$ R = \frac{\tan \dfrac{\beta 1 + \beta 2}{2}}{\tan \dfrac{\beta 1 + \beta 2}{2} + \tan \dfrac{\alpha 1 + \alpha 2}{2}} $$

Die Winkel $\alpha 1$, $\alpha 2$, $\beta 1$, $\beta 2$ werden, wie in Figur 1 dargestellt, zwischen Tangenten der jeweiligen Skelettlinie und einer axialen Strömungsrichtung x der Strömungsmaschine abgetragen. $\alpha 1$ wird von der Hinterkante einer Leitschaufel 2 einer Leitschaufelreihe n-1 abgetragen. $\alpha 2$ wird zur Anströmkante einer Leitschaufel 4 einer Leitschaufelreihe n hin abgetragen. $\beta 1$ wird zur Anströmkante einer Laufschaufel 6 einer Laufschaufelreihe n hin abgetragen. $\beta 2$ wird von der Hinterkante der Laufschaufel 6 der Laufschaufelreihe n abgetragen. Dabei läuft die Laufschaufel 6 bzw. die Laufschaufelreihe n in Umfangsrichtung u zwischen den Leitschaufeln 2, 4 bzw. den Leitschaufelreihen n-1, n hindurch. Der Buchstabe n kennzeichnet ganzzahlige Vielfache von 1, 2,... Bei Verdichtern bewegt sich der Reaktionsgrad gewöhnlich in einem Bereich von 0,5 bis 1,0. Bei Turbinen bewegt er sich gewöhnlich zwischen 0,0...0,05 und 0,5. Der Reaktionsgrad wird über die axiale Breite des Verdichters von seinem Verdichtereintritt bis zum Verdichteraustritt betrachtet.

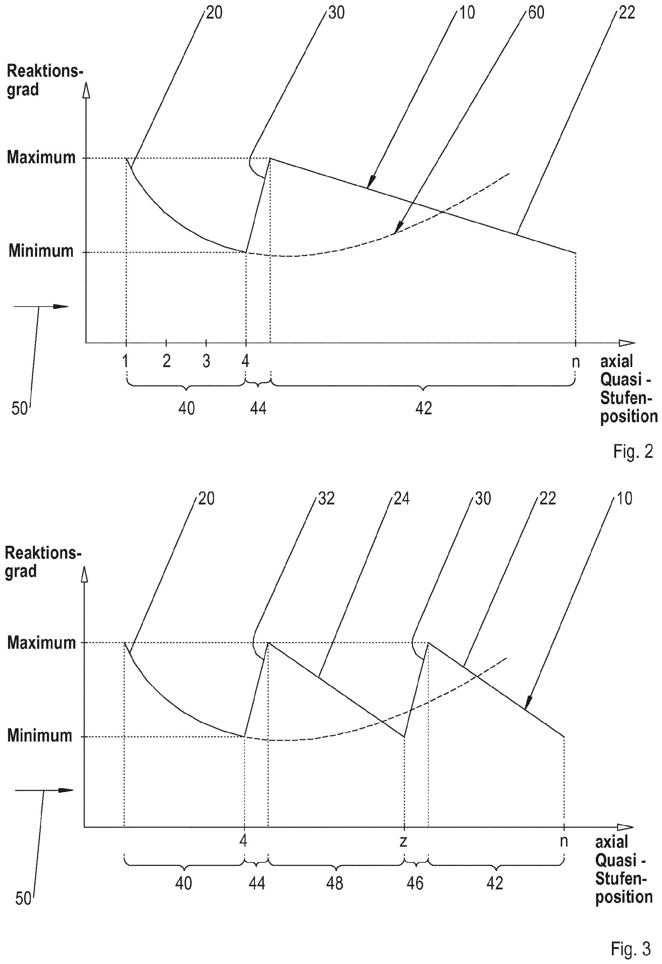

In Figur 2 ist ein Verlauf eines erfindungsgemäßen Reaktionsgrades 10 gemäß einem ersten Ausführungsbeispiels eines erfindungsgemäßen Verdichters einer Strömungsmaschine gezeigt.

Der Verdichter ist hier ein Axialverdichter und die Strömungsmaschine ist beispielsweise ein Flugtriebwerk. Erfindungsgemäß wird der auf ein Minimum langsam abgefallene Reaktionsgrad 10 im Verdichter schnell wieder angehoben und fällt dann wieder langsam ab. Der Reaktionsgrad 10 hat somit zwei langsam abfallende Abschnitte 20, 22 und einen schnellen, steilen Abschnitt 30. Mit anderen Worten, der Reaktionsgrad 10 fällt in zwei Verdichterbereichen 40, 42 langsamer ab als er in einem zwischen diesen Verdichterbereichen 40, 42 angeordneten Verdichterbereich 44 angehoben wird bzw. der Reaktionsgrad 10 wird in einem Verdichterbereich 44 schneller angehoben als er in einem vorderen Verdichterbereich 40 und hinteren Verdichterbereich 42 abfällt.

Im Sinne der Erfindung bedeutet "hochumlenkend" eine de Haller-Zahl kleiner als 0,65, alternativ einen Diffusionsgrad von größer als 0,6. "Nichthochumlenkend" bedeutet eine de Haller-Zahl bevorzugterweises größer als 0,70. Als de Haller-Zahl gilt der Quotient (v2/vl) einer Anströmgeschwindigkeit v1 eines Schaufelgitters und einer Abströmgeschwindigkeit v2 eines Schaufelgitters.

Der Verdichtereintritt geht in Richtung eines den Verdichter durchströmenden Hauptstroms 50 bzw. stromabwärts in den vorderen Verdichterbereich 40 über. Der Verdichteraustritt ist stromabwärts des hinteren Verdichterbereichs 42 angeordnet.

Der vordere Verdichterbereich 40 besteht aus verstellbaren und nichthochumlenkenden Leitgittern. Diese Leitgitter sind somit Verstellleitgitter. In dem hier gezeigten Ausführungsbeispiel umfasst der vordere Verdichterbereich das 1. 2. und 3. Leitgitter des Verdichters. Ihre Auslegung erfolgt konventionell. Der Reaktionsgradabfall auf das Minimum erfolgt vorteilhafterweise parabelartig.

Der hintere Verdichterbereich 42 besteht aus nichtverstellbaren und nichthochumlenkenden Leitgittern. Die Auslegung der Leitgitter ist wenig belastet und insbesondere derart, dass ein stetiger, linearer Abfall des Reaktionsgrad 10 über die Leitgitter erfolgt.

Unmittelbar stromabwärts des hinteren Verdichterbereichs 42, quasi am Ende des hinteren Verdichterbereichs 42, ist an der axialen Position n ein Leitgitter als hochumlenkendes Austrittsleitgitter ausgeführt. Beispielsweise besteht das Austrittsleitgitter aus Tandemanordnungen mit zumindest jeweils 2 Schaufelreihen. Es dient zur Drallbefreiung des Hauptstroms 50, um diesen drallbefreit bzw. nahezu drallbefreit einem folgenden Brennkammerbereich zuzuführen.

Zwischen dem vorderen Verdichterbereich 40 und dem hinteren Verdichterbereich 42 ist im Verdichterbereich 44 ein nichtverstellbares, hochumlenkendes Leitgitter angeordnet. Das hochumlenkende Leitgitter besteht beispielsweise aus Tandemanordnungen mit zumindest jeweils 2 Schaufelblättern. In dem hier gezeigten Ausführungsbeispiel mit einem verstellbaren Vorleitgittern und den drei Verstellleitgittern bzw. Verstellstatorgittern ist dieses Leitgitter bzw. Statorgitter das 4. Leitgitter und dabei das erste nichtverstellbare Leitgitter. Zusammen mit einem stromabwärtigen, benachbarten Laufgitter bildet es eine sogenannte 5. Quasi-Stufe. Quasi-Stufe bedeutet, dass es sich um das 4. Leitgitter und um das 5. Laufgitter handelt. Am Eintritt des 5. Laufgitters ist der Reaktionsgrad 10 stark angehoben. Der Anstieg erfolgt hier auf das eintrittsseitige Maximum. Es sei erwähnt, dass der Anstieg aber auch bis auf einen Wert unterhalb oder oberhalb des Maximums angehoben werden kann.

An seinem Eintritt weist der Verdichter einen hohen Reaktionsgrad 10 auf. Dieser fällt langsam im vorderen Verdichterbereich 40 über die hier vier nichthochumlenkenden Leitgitter (ein Vorleitgitter und drei Statorgitter) auf ein Minimum ab. Mittels des 4. Leitgitters bzw. über die 5. Quasi-Stufe wird der Reaktionsgrad 10 schnell stark angehoben, beispielsweise auf Höhe des eintrittsseitigen Reaktionsgrads. In dem hinteren Verdichterbereich 42 fällt der Reaktionsgrad 10 dann wieder über mehrere Quasi-Stufen langsam auf ein erneutes Minimum ab. Der aus dem hinteren Verdichterbereich 42 austretende Hauptstrom 50 trifft drallbeaufschlagt auf das Austrittsleitgitter mit minimalen Reaktionsgrad 10 und wird von diesem drallbefreit bzw. nahezu drallbefreit. Nach der Drallbefreiung verlässt der Hauptstrom 50 den Verdichter am Austritt und tritt drallbefreit in den Brennkammerbereich ein.

Durch den Reaktionsgradverlauf mit abfallenden Abschnitten 20, 22 im vorderen und hinteren Verdichterbereich 40, 42 werden die nichthochumlenkenden Leitschaufeln entlastet, denn ein abfallender Reaktionsgrad bedeutet eine aerodynamische Entlastung. Durch die jeweils langsamen Reaktionsgradreduzierungen, d.h. der Abbau des Reaktionsgrads 10 findet über mehrere Leitgitter statt, werden eine Vielzahl von Leitgittern und insbesondere die Mehrheit der Leitgitter entlastet. Hierdurch können die Mehrzahl der Leitgitter mit einer geringeren Schaufelzahl versehen werden als herkömmliche Leitgitter in vergleichender axialer Verdichterposition, was zu einer Steigerung eines Wirkungsgrads führt.

Durch den hohen Reaktionsgrad 10 im Verdichter unmittelbar nach dem Verdichterbereich 44 wird eine hohe Stabilität erreicht, was sich besonders günstig im Teillastbetrieb auswirkt.

Mittels des hochumlenkenden Austrittsleitgitters wird der Hauptstrom 50 schnell von seinem Drall bzw. Restdrall befreit, so dass der fallende Reaktionsgrad 10 unmittelbar bis zum Austrittsleitgitter genutzt wird.

Zur zusätzlichen Veranschaulichung des erfindungsgemäßen Reaktionsgrads 10 ist in der Figur 2 ebenfalls ein Verlauf eines herkömmlichen Reaktionsgrads 60 als gestrichelte, nach dem Minimum bzw. nach den Verstellleitgittern über sämtliche nachfolgende Leitgitter langsam ansteigende Kurve skizziert.

In Figur 3 ist ein Verlauf eines Reaktionsgrades 10 gemäß einem zweiten Ausführungsbeispiels eines erfindungsgemäßen Verdichters einer Strömungsmaschine gezeigt. Im Unterschied zum ersten Ausführungsbeispiel nach Figur 2 zeigt der Reaktionsgrad 10 hier drei langsam abfallende Abschnitte 20, 22, 24 und zwei schnell und steil ansteigende Abschnitte 30, 32. Somit ergibt sich ein sägezahnartiger Verlauf. Dieser sägezahnartige Verlauf kann um weitere abfallende Abschnitte 20, 22, 24 und schnell und steil ansteigende Abschnitte 30, 32 ergänzt werden.

Zwischen einem ersten hochumlenkenden, nichtverstellbaren Leitgitter an 4. axialer Position gemäß dem Ausführungsbeispiel nach Figur 1 bzw. im Verdichterbereich 44 und einem nichtverstellbaren hochumlenkenden Austrittsleitgitter an der axialen Position n ist an einer axialen Position z bzw. in einem Verdichterbereich 46 ein hochumlenkendes Zwischenleitgitter angeordnet.

Das Zwischenleitgitter ist hier gemäß dem 4. Leitgitter bzw. Statorgitter ausgeführt, so dass der in einem Zwischenverdichterbereich 48 zwischen dem ersten hochumlenkenden Leitgitter und dem Zwischenleitgitter ein auf ein Minimum abgefallener Reaktionsgrad 10 erneut stark angehoben wird. Bevorzugterweise wird auf das ursprüngliche Maximum am Verdichtereintritt angehoben. Zusammen mit einer nachgelagerten Laufreihe bildet es die z+1 Quasi-Stufe. Beispielsweise weisen das vordere Leitgitter und das Zwischenleitgitter Tandemanordnungen auf.

Die Leitgitter in dem Zwischenverdichterbereich 48 und in dem hinteren Verdichterbereich 42 sind nichtverstellbar und nichthochumlenkend. Sie sind derart ausgelegt, dass der Reaktionsgrad 10 bis zum Zwischenleitgitter bzw. Austrittsleitgitter auf das Minimum langsam abfällt. Im Vergleich zum Ausführungsbeispiel nach Figur 2 wird hier der Reaktionsgrad 10 über eine geringere Leitgitterzahl und somit schneller bis zu einem Minimum abgebaut. Da die Anhebung des Reaktionsgrades 10 jedoch nur über ein Leitgitter bzw. Zwischenleitgitter erfolgt, ist der Reaktionsgradabbau auch beim zweiten Ausführungsbeispiel langsam im Vergleich zum Reaktionsgradaufbau.

Das Austrittsleitgitter stromabwärts des hinteren Verdichterbereichs 42 an der axialen Position n ist gemäß dem ersten Ausführungsbeispiel als nichtverstellbares, hochumlenkendes Leitgitter zur Drallbefreiung des Hauptstroms ausgeführt.

Die Leitgitter im vorderen Verdichterbereich 40 stromaufwärts des ersten hochumlenkenden Leitgitters sind gemäß dem ersten Ausführungsbeispiel nach Figur 2 als vier nichthochumlenkende Verstellleitgitter ausgeführt, und zwar in dem hier gezeigten Ausführungsbeispiel als ein verstellbares Vorleitgitter und drei stromabwärtige verstellbare Statorgitter.

Offenbart ist ein Verfahren zum Betreiben eines Verdichters einer Strömungsmaschine, wobei in Richtung eines Hauptstroms betrachtet ein langsam abfallender Reaktionsgrad in einem Verdichterbereich schneller angehoben wird als zuvor abgefallen ist und dann der angehobene Reaktionsgrad in einem folgenden Verdichterbereich wieder langsamer abgebaut wird, als er zuvor angehoben wurde, ein Verdichter einer Strömungsmaschine, mit zumindest einem schneller ansteigenden Reaktionsgrad in einem Verdichterbereich im Vergleich zu benachbarten Verdichterbereichen mit jeweils einem abfallenden Reaktionsgrad, wodurch sich ein sägezahnartiger Verlauf des Reaktionsgrades ergibt, und eine Strömungsmaschine mit einem derartigen Verdichter.

Bezugszeichenliste

| 2 | Leitschaufel - Stufe n-1 |
| 4 | Leitschaufel - Stufe n |
| 6 | Laufschaufel - Stufe n |
| 10 | Reaktionsgrad |
| 20 | abfallender Abschnitt |
| 22 | abfallender Abschnitt |
| 24 | abfallender Abschnitt |
| 30 | ansteigender Abschnitt |
| 32 | ansteigender Abschnitt |
| 40 | Verdichterbereich |
| 42 | Verdichterbereich |
| 44 | Verdichterbereich |
| 46 | Verdichterbereich |
| 48 | Zwischenverdichterbereich |
| 50 | Hauptstrom |

**Patentansprüche**

1. Verfahren zum Betreiben eines Verdichters einer Strömungsmaschine, wobei in Richtung eines Hauptstroms (50) betrachtet ein langsam abfallender Reaktionsgrad (10) in einem Verdichterbereich (44) schnell angehoben wird und der angehobene Reaktionsgrad (10) dann wieder langsam abgebaut wird.

2. Verfahren nach Patentanspruch 1, wobei der Reaktionsgrad (10) mehrmals schnell angehoben wird und jeweils nach dem Anheben langsam abfällt.

3. Verfahren nach Patentanspruch 1 oder 2, wobei ein Drall des Hauptstroms (50) nach einem langsamen Abfall des Reaktionsgrades (10) abgebaut wird.

4. Verfahren nach einem der vorangehenden Patentansprüche, wobei sich der lokale Reaktionsgrad einer Rotorstufe gemäß folgender Beziehung berechnen lässt

$$R = \frac{\tan\dfrac{\beta1 + \beta2}{2}}{\tan\dfrac{\beta1 + \beta2}{2} + \tan\dfrac{\alpha1 + \alpha2}{2}},$$

mit Winkeln $\alpha1$, $\alpha2$, $\beta1$, $\beta2$, die zwischen Tangenten der jeweiligen Skelettlinie und einer axialen Strömungsrichtung (x) der Strömungsmaschine abgetragen werden,
wobei der Winkel $\alpha1$ von einer Hinterkante einer Leitschaufel (2) einer der Rotorstufe vorangehenden Leitschaufelreihe abgetragen wird,
wobei der Winkel $\alpha2$ zu einer Anströmkante einer Leitschaufel (4) einer der Rotorstufe nachgehenden Leitschaufelreihe hin abgetragen wird,
wobei der Winkel $\beta1$ zu einer Anströmkante einer Laufschaufel (6) einer Laufschaufelreihe der Rotorstufe hin abgetragen,
wobei der Winkel $\beta2$ wird von einer Hinterkante der Laufschaufel (6) der Laufschaufelreihe der Rotorstufe abgetragen wird.

**5.** Verdichter einer Strömungsmaschine, mit zumindest einem hochumlenkenden Leitgitter zum Anheben eines Reaktionsgrades (10), das zwischen einem in Richtung eines Hauptstroms (50) betrachtet vorderen Verdichterbereich (40) und einem hinteren Verdichterbereich (42) angeordnet ist, in dem der Reaktionsgrad jeweils langsam abfällt.

**6.** Verdichter nach einem der vorhergehenden Patentansprüche, wobei das zumindest eine hochumlenkende Leitgitter nichtverstellbar ist und die nichthochumlenkenden Leitgitter in dem vorderen Verdichterbereich (40) verstellbar sind.

**7.** Verdichter nach Patentanspruch 5 oder 6, wobei die nichthochumlenkenden Leitgitter in dem hinteren Verdichterbereich (42) nichtverstellbar sind.

**8.** Verdichter nach einem der Patentansprüche 5 bis 7, wobei stromabwärts des hinteren Verdichterbereichs (42) ein hochumlenkendes Austrittsleitgitter zum Abbauen eines Dralls des Hauptstroms (50) angeordnet ist.

**9.** Verdichter nach einem der Patentansprüche 5 bis 8, wobei das hochumlenkende Austrittsleitgitter nichtverstellbar ist.

**10.** Verdichter nach einem der Patentansprüche 5 bis 9, wobei zwischen dem zumindest einem hochumlenkenden Leitgitter und dem Austrittsleitgitter zumindest ein hochumlenkendes Zwischenleitgitter zum Anheben des Reaktionsgrades (10) angeordnet ist, dem ein Zwischenverdichterbereich (48) mit nichthochumlenkenden Leitgittern vorgeschaltet ist.

**11.** Verdichter nach Patentanspruch 10, wobei das zumindest eine hochumlenkende Zwischenleitgitter nichtverstellbar ist und die nichthochumlenkenden Leitgitter in dem Zwischenverdichterbereich (42) nichtverstellbar sind.

**12.** Verdichter nach einem der Patentansprüche 5 bis 11, wobei die hochumlenkenden Leitgitter Tandemanordnungen sind.

**13.** Strömungsmaschine mit einem Verdichter nach einem der Patentansprüche 5 bis 12 bzw. mit einem Verdichter, betrieben nach einem Verfahren nach den Patentansprüchen 1 bis 4.

## Claims

**1.** Method for operating a compressor of a turbomachine, wherein, when considered in the direction of a main flow (50), a gradually decreasing degree of reaction (10) is rapidly increased in a compressor region (44), and the increased degree of reaction (10) is then gradually reduced again.

**2.** Method according to claim 1, wherein the degree of reaction (10) is rapidly increased many times and gradually decreases following each increase.

**3.** Method according to either claim 1 or claim 2, wherein swirling of the main flow (50) reduces following a gradual decrease in the degree of reaction (10).

**4.** Method according to any of the preceding claims, wherein the local degree of reaction of a rotor stage can be calculated according to the following formula

$$R = \frac{\tan\dfrac{\beta1 + \beta2}{2}}{\tan\dfrac{\beta1 + \beta2}{2} + \tan\dfrac{\alpha1 + \alpha2}{2}},$$

with angles $\alpha1$, $\alpha2$, $\beta1$, $\beta2$ which are marked off between tangents of the relevant skeleton line and an axial flow direction (x) of the turbomachine,
where angle $\alpha1$ is marked off by a rear edge of a guide vane (2) of a row of guide vanes upstream of the rotor stage,
where angle $\alpha2$ is marked off towards a leading edge of a guide vane (4) of a row of guide vanes downstream of the rotor stage,
where angle $\beta1$ is marked off towards a leading edge of a rotor blade (6) of a row of rotor blades of the rotor stage,
where angle β2 is marked off by a rear edge of the rotor blade (6) of the row of rotor blades of the rotor stage.

5. Compressor of a turbomachine, comprising at least one highly-deflecting diffuser for increasing a degree of reaction (10), which diffuser is arranged, when considered in the direction of a main flow (50), between a front compressor region (40) and a rear compressor region (42) in which the degree of reaction gradually decreases in each case.

6. Compressor according to any of the preceding claims, wherein the at least one highly-deflecting diffuser is non-adjustable, and the non-highly-deflecting diffusers in the front compressor region (40) are adjustable.

7. Compressor according to either claim 5 or claim 6, wherein the non-highly-deflecting diffusers in the rear compressor region (42) are non-adjustable.

8. Compressor according to any of claims 5 to 7, wherein a highly-deflecting outlet diffuser is arranged downstream of the rear compressor region (42) in order to reduce swirling of the main flow (50).

9. Compressor according to any of claims 5 to 8, wherein the highly-deflecting outlet diffuser is non-adjustable.

10. Compressor according to any of claims 5 to 9, wherein at least one highly-deflecting intermediate diffuser is arranged between the at least one highly-deflecting diffuser and the outlet diffuser in order to increase the degree of reaction (10), an intermediate compressor region (48) comprising non-highly-deflecting diffusers being positioned upstream of said intermediate diffuser.

11. Compressor according to claim 10, wherein the at least one highly-deflecting intermediate diffuser is non-adjustable, and the non-highly-deflecting diffusers in the intermediate compressor region (42) are non-adjustable.

12. Compressor according to any of claims 5 to 11, wherein the highly-deflecting diffusers are tandem arrangements.

13. Turbomachine comprising a compressor according to any of claims 5 to 12 or comprising a compressor operated in accordance with a method according to claims 1 to 4.

**Revendications**

1. Procédé visant à exploiter le compresseur d'une turbomachine **caractérisé en ce qu'**un degré de réaction lentement décroissant (10) est rapidement augmenté, dans la direction d'un courant principal (50), dans une partie du compresseur (44) et que le degré de réaction augmenté (10) est ensuite de nouveau lentement réduit.

2. Procédé selon la revendication 1 **caractérisé en ce qu'**un degré de réaction (10) est rapidement augmenté à plusieurs reprises, puis diminue lentement après chaque augmentation.

3. Procédé selon la revendication 1 ou 2 **caractérisé en ce qu'**une rotation du courant principal (50) est diminuée après une chute lente du degré de réaction (10).

4. Procédé selon l'une des précédentes revendications **caractérisé en ce que** le degré de réaction local d'un étage de rotor peut être calculé selon la relation suivante

$$R = \frac{\tan\frac{\beta1 + \beta2}{2}}{\tan\frac{\beta1 + \beta2}{2} + \tan\frac{\alpha1 + \alpha2}{2}},$$

avec les angles α1, α2, β1, β2 qui peuvent être relevés entre les tangentes de chaque squelette et un sens d'écoulement axial (x) de la turbomachine,
**caractérisé en ce que** l'angle α1 est relevé à partir du bord de fuite d'une aube directrice (2) située sur une rangée d'aubes directrices en amont de l'étage du rotor,
**caractérisé en ce que** l'angle α2 est relevé par rapport au bord d'attaque d'une aube directrice (4) située sur une rangée d'aubes directrices en aval de l'étage du rotor,
**caractérisé en ce que** l'angle β1 est relevé par rapport au bord d'attaque d'une aube mobile (6) située sur une rangée d'aubes mobiles de l'étage du rotor,
**caractérisé en ce que** l'angle β2 est relevé à partir du bord de fuite d'une aube mobile (6) située sur la rangée d'aubes mobiles de l'étage du rotor.

5. Compresseur d'une turbomachine avec au moins une aube directrice à forte déviation permettant d'élever le degré de réaction (10) qui est disposée, dans la direction d'un courant principal (50), entre une partie avant du compresseur (40) et une partie arrière du compresseur (42) dans laquelle le degré de réaction diminue lentement à chaque fois.

6. Compresseur selon l'une des précédentes revendications **caractérisé en ce qu'**au moins une aube directrice à forte déviation n'est pas réglable et que les aubes directrices qui ne sont pas à forte déviation sont réglables dans la partie avant du compresseur (40).

7. Compresseur selon la revendication 5 ou 6 **caractérisé en ce que** les aubes directrices qui ne sont pas à forte déviation ne sont pas réglables dans la partie arrière du compresseur (42).

8. Compresseur selon l'une des revendications 5 à 7 **caractérisé en ce qu'**une aube directrice de sortie à forte déviation est disposée en aval de la partie arrière du compresseur (42) pour diminuer une rotation du courant principal (50).

9. Compresseur selon l'une des revendications 5 à 8 **caractérisé en ce que** l'aube directrice de sortie à forte déviation n'est pas réglable.

10. Compresseur selon l'une des revendications 5 à 9 **caractérisé en ce qu'**au moins une aube directrice intermédiaire à forte déviation, précédant une partie intermédiaire du compresseur (48) pourvue d'aubes directrices qui ne sont pas à forte déviation, est disposée entre au moins une aube directrice à forte déviation et l'aube directrice de sortie afin d'élever le degré de réaction (10).

11. Compresseur selon la revendication 10 **caractérisé en ce qu'**au moins une aube directrice intermédiaire à forte déviation n'est pas réglable et que les aubes directrices qui ne sont pas à forte déviation ne sont pas réglables dans la partie intermédiaire du compresseur (42).

12. Compresseur selon l'une des revendications 5 à 11 **caractérisé en ce que** les aubes directrices à forte déviation sont disposées en tandem.

13. Turbomachine équipée d'un compresseur selon l'une des revendications 5 à 12 ou équipée d'un compresseur exploité au moyen d'un procédé selon les revendications 1 à

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2944824 A1
- GB 2187237 A
- DE 1428098 A1
- DE 855891 C
- GB 710300 A